# EUROPÄISCHE PATENTSCHRIFT

(11) **EP 1 230 590 B1**
(45) Veröffentlichungstag und Bekanntmachung des Hinweises auf die Patenterteilung: **25.06.2003**
(21) Anmeldenummer: 00985008.2
(22) Anmeldetag: 10.11.2000
(51) Int. Cl.: G06F 9/00

(54) **PROZESSORSYSTEM**
PROCESSOR SYSTEM
SYSTEME DE PROCESSEUR

(30) Priorität: 19.11.1999 DE 19955776
(43) Veröffentlichungstag der Anmeldung: 14.08.2002
(73) Patentinhaber: Infineon Technologies AG, 81669 München (DE)
(72) Erfinder: NIE, Xiaoning, 81543 München (DE); HOBER, Peter, 85521 Riemerling (DE); JENKNER, Christian, A-9220 Velden (AT)
(74) Vertreter: Charles, Glyndwr
(86) Internationale Anmeldenummer: EP0011164
(87) Internationale Veröffentlichungsnummer: WO01038968

(56) Entgegenhaltungen:
- WO-A-99/21083
- US-A- 4 975 836

## Beschreibung

Die vorliegende Erfindung betrifft ein Prozessorsystem, welches zur Verarbeitung von Interrupts in der Lage ist.

Telekommunikations-Endgeräte, wie beispielsweise Modems oder sogenannte Linecards, müssen auf bestimmte Software- oder Hardwareereignisse reagieren können. Wird zu Steuerungszwecken in derartigen Telekommunikations-Endgeräten ein Prozessorsystem eingesetzt, wird in dem Prozessorsystem zur Reaktion auf die zuvor beschriebenen Ereignisse gewöhnlich eine Interruptverarbeitung vorgesehen.

Zur Interruptverarbeitung werden die einzelnen Ereignisse, die in dem Prozessorsystem einen Interrupt auslösen können, überwacht. Sobald das Auftreten eines Interrupt-Ereignisses erkannt worden ist, wird ein entsprechendes Interrupt-Anforderungssignal generiert und an eine Prozessoreinheit des Prozessorsystems übermittelt, die daraufhin die Startadresse der entsprechenden Interruptroutine, welche zur Ausführung des Interrupts in dem Prozessorsystem ablaufen soll, ermittelt. Treten gleichzeitig mehrere Interrupt-Ereignisse auf, wird aus diesen Interrupt-Ereignissen lediglich ein bestimmtes Interrupt-Ereignis nach einem vorgegebenen Schema zur Ausführung des entsprechenden Interrupts ausgewählt. Der Wert des Programmzählers ("Programm Counter", PC) des vor dem Interrupt in dem Prozessorsystem ablaufen Programmablaufs wird auf einem Stack- oder Stapelspeicher gesichert, so daß anschließend die Interruptroutine ausgeführt werden kann. Nach Beendigung der Interruptroutine kann durch Zugriff auf den gesicherten Programmzähler wieder mit dem ursprünglichen programmablauf fortgefahren werden.

Vor der Durchführung der Interruptroutine müssen im allgemeinen nicht nur der augenblickliche Wert des Programmzählers, sondern auch weitere Informationen über den Zustand des Prozessorsystems bzw. des darauf ablaufenden programmablaufs vor dem Auftreten des Interrupt-Ereignisses gesichert werden. Diese Zustandsinformationen können insbesondere die Inhalte von Registern oder Zero- bzw. Carry-Flags etc. betreffen. Zur Beschleunigung der Interruptverarbeitung werden daher in bekannten Prozessorsystemen sogenannte Schattenregister ("Shadow Register") verwendet, welche Zusatzregister darstellen, die nur im Falle eines Interrupts zur Sicherung der obigen Zustandsinformationen in Erscheinung treten und ansonsten nicht verwendet werden (vgl. z.B. "ARM System Architecture", Steve Furber, Addison-Wesley, 1996). Auf diese Weise können zeitaufwendige Registerspeicherbefehle zum Sichern der beschriebenen Informationen vermieden werden.

Der zuvor erwähnte Ansatz stellt jedoch nur dann eine wirksame Maßnahme dar, wenn in dem Prozessorsystem der Ablauf lediglich eines Programmablaufs ("Task") vorgesehen ist. In sogenannten "Multitasking"-Prozessorsystemen, in denen mehrere Programmabläufe gleichzeitig bzw. quasigleichzeitig ablaufen können, kann dieser Ansatz nicht ohne weiteres angewendet werden, da hier für die einzelnen Programmabläufe unterschiedliche Programmzähler berücksichtigt werden müssen. Zudem ist der zuvor beschriebene Ansatz aufgrund der Verwendung der zusätzlichen Schattenregister relativ aufwendig.

Der vorliegenden Erfindung liegt daher die Aufgabe zugrunde, ein Prozessorsystem mit Interruptverarbeitung vorzuschlagen, bei dem ein durch einen entsprechenden Interrupt hervorgerufener Wechsel des Programmablaufs mit geringerem Aufwand durchgeführt werden kann.

Diese Aufgabe wird erfindungsgemäß durch ein Prozessorsystem mit den Merkmalen des Anspruches 1 gelöst. Die Unteransprüche definieren vorteilhafte und bevorzugte Ausführungsformen der vorliegenden Erfindung.

Erfindungsgemäß sind für unterschiedliche Programmabläufe ("Tasks") unterschiedliche Speichermittel vorgesehen, wobei die Speichermittel insbesondere einen Speicher für den Programmzähler des jeweiligen Programmablaufs, Register zum Zwischenspeichern von Daten während der Ausführung des jeweiligen Programmablaufs und Zustandsregister zum Speichern von Zustandsinformationen, wie beispielsweise Carry- oder Zero-Flags, umfassen können. Soll bei Auftreten eines bestimmten Interrupt-Ereignisses von einem Programmablauf auf einen anderen Programmablauf umgeschaltet werden, muß hierzu lediglich auf die dem neuen Programmablauf zugeordneten Speichermittel umgeschaltet werden. Auf diese Weise wird durch das Vorsehen getrennter Hardwarebereiche für unterschiedliche Programmabläufe ein hardwaregestützter Multitasking-Betrieb des Prozessorsystems ermöglicht, ohne daß beim Umschalten auf einen neuen Programmablauf eine Vielzahl von Sicherungsvorgängen durchgeführt werden müssen.

Die Verarbeitung der unterschiedlichen Interrupts erfolgt vorzugsweise prioritätsgesteuert, wobei sowohl den entsprechenden Interrupt-Ereignissen als auch den in dem Prozessorsystem ablaufenden Programmabläufen individuelle Prioritäten zugewiesen sind. Vorzugsweise ist ein bestimmter Prioritätsgrad definiert, der zu einem Programmablaufwechsel führen kann. Nur Ereignisse mit diesem bestimmten Prioritätsgrad können einen Programmablaufwechsel hervorrufen. Alle anderen Ereignisse haben lediglich zur Folge, daß eine Startadresse für die entsprechende Interruptroutine erzeugt wird.

Die vorliegende Erfindung eignet sich beispielsweise zum Einsatz in Telekommunikations-Endgeräten, wie z.B. Modems oder Linecards, wobei dies insbesondere auf xDSL-Endgeräte zutrifft.

Die Erfindung wird nachfolgend näher unter Bezugnahme auf die beigefügte Zeichnung anhand eines bevorzugten Ausführungsbeispiels erläutert.
Fig. 1 zeigt ein vereinfachtes Blockschaltbild eines Prozessorsystems gemäß einem bevorzugten Ausführungsbeispiel der vorliegenden Erfindung,
Fig. 2 zeigt eine mögliche Realisierung einer in Fig. 1 gezeigten Programmsteuerungseinheit,
Fig. 3 zeigt eine mögliche Realisierung einer in Fig. 2 gezeigten Ereignisauswertungseinheit, und
Fig. 4 zeigt eine mögliche Realisierung einer in Fig. 3 gezeigten Überwachungseinheit.

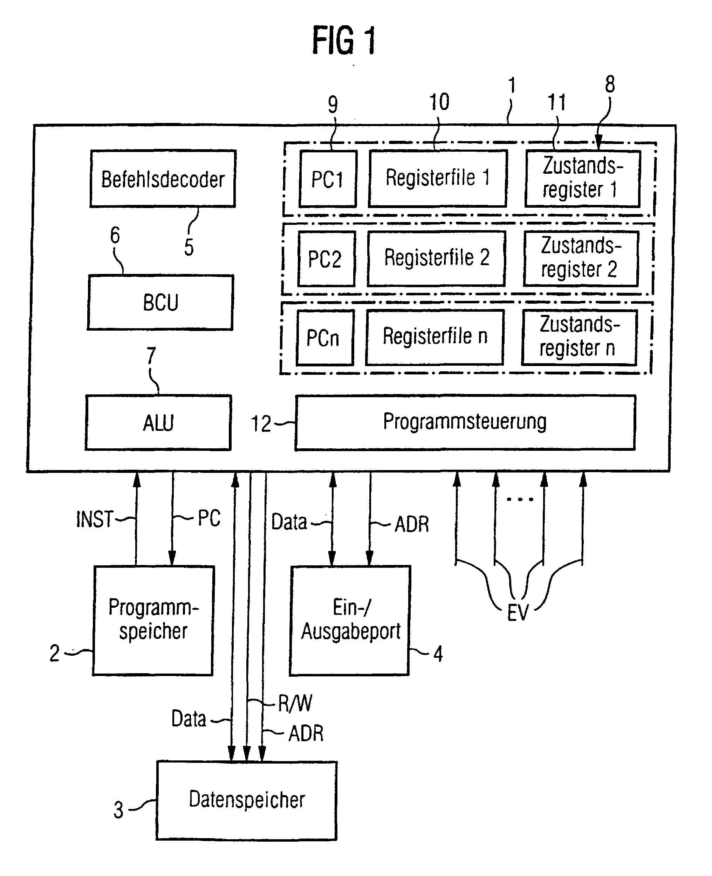

Das in Fig. 1 gezeigte Prozessorsystem umfaßt eine Prozessoreinheit 1, die u.a. eine Programmsteuerung 12 sowie einen Befehlsdecoder 5, eine sogenannte "Branch Control"-Einheit ("Branch Control Unit", BCU) 6 und mindestens eine Ausführungseinheit ("Algorithmic Logic Unit", ALU) 7 umfaßt. Darüber hinaus ist für jeden auf dem Prozessorsystem ausführbaren Programmablauf ("Task") eine individuelle oder programmablauf-spezifische Hardwareumgebung 8 vorgesehen, die jeweils einen Stapelspeicher 9, eine Registerbank mit einem oder mehreren Registern 10 und ein oder mehrere Zustandsregister 11 umfaßt. In dem Stapelspeicher 9 ist jeweils der augenblickliche Wert des Programmzählers ("Program Counter", PC) des entsprechenden Programmablaufs gespeichert. Die Register 10 dienen während der Abarbeitung des entsprechenden Programmablaufs zum Zwischenspeichern von Daten. Die Zustandsregister 11 sind hingegen zum Speichern von Zustandsinformationen oder Zustandsflags, wie beispielsweise von Zero- oder Carry-Flags, vorgesehen, so daß der Inhalt der Zustandsregister jeweils den augenblicklichen Zustand des entsprechenden Programmablaufs bezeichnet.

Die Programmsteuerung 12 überwacht mehrere Interrupt-Ereignisse EV. Bei Auftreten eines bestimmten Interrupt-Ereignisses wird entweder eine entsprechende Interruptroutine gestartet oder ein Programmablaufwechsel durchgeführt. Von der Programmsteuerung 12 wird somit der jeweils aktuelle Programmablauf sowie der auszuführende Befehl innerhalb dieses Programmablaufs und damit der Wert des Programmzählers dieses Programmablaufs festgelegt und entsprechende Informationen ausgegeben.

Mit Hilfe dieses von der Programmsteuerung 12 ausgegebenen Werts des Programmzählers PC kann auf einen Programmspeicher 2 zugegriffen werden und ein entsprechender Befehl INST ausgelesen werden. Dieser Befehl INST wird von dem Befehlsdecoder 5 decodiert und zur Ausführung der BCU-Einheit 6 und der Ausführungseinheit 7 zugeführt, wobei diesen beiden zuletzt genannten Einheiten auch die Nummer des abzuarbeitenden Programmablaufs bekannt ist. Die BCU-Einheit 6 stellt zusammen mit dem Befehlsdecoder 5 sicher, daß stets auf die korrekte Hardwareumgebung 8, d.h. die tatsächlich für den abzuarbeitenden Programmablauf vorgesehene Hardwareumgebung, zugegriffen wird. Dabei ist die BCU-Einheit 6 für eine hardwaremäßige Umschaltung zwischen den Stapelspeichern 9, die für die einzelnen Programmzähler PC vorgesehen sind, verantwortlich, während auf die Registern 10 und die Zustandsregistern 11 sowohl mit Hilfe einer hardwaremäßigen Umschaltung durch die BCU-Einheit 6 als auch softwaremäßig mit Hilfe eines internen Befehls durch den Befehlsdecoder 5 zugegriffen wird. Die Ausführungseinheit 7 führt schließlich unter Verwendung der entsprechenden Hardwareumgebung 8 den Befehl INST aus, wobei hierzu die Adressierung eines Datenspeichers 3 erforderlich sein kann, an dem ein Adreßsignal ADR angelegt und mit Hilfe eines Steuersignals R/W festgelegt wird, ob Daten DATA aus dem Datenspeicher 3 ausgelesen oder in den Datenspeicher 3 geschrieben werden sollen. Ebenso kann infolge der Befehlsausführung die Adressierung eines oder mehrerer Ein/Ausgabeports 4 notwendig sein, an die ein Adreßsignal ADR anzulegen ist, um Daten DATA aus einem Ausgabeport 4 auslesen bzw. in einen Eingabeport 4 schreiben zu können.

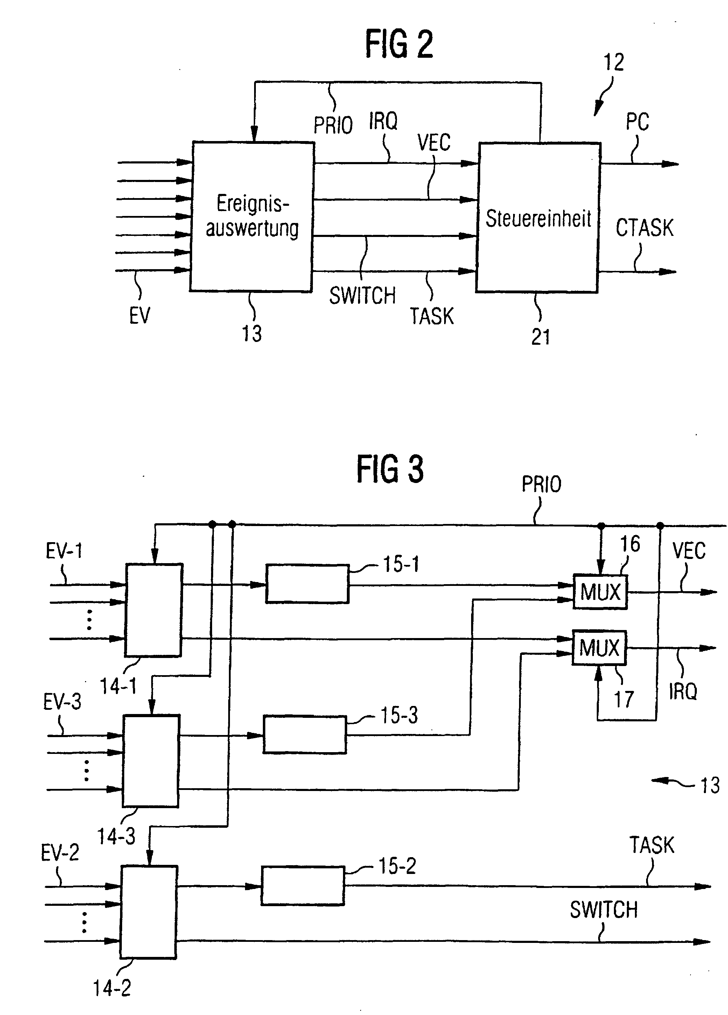

in Fig. 2 ist eine mögliche Realisierung für die Programmsteuerung 12 dargestellt. Eine Auswertungseinheit 13 überwacht das Auftreten der einzelnen Interrupt-Ereignisse EV und erzeugt davon abhängig ein Interrupt-Anforderungssignal IRQ mit einer Startadresse VEC für die entsprechende Interruptroutine oder ein Umschaltsignal SWITCH zur Einleitung eines Programmablaufwechsels mit einer Information TASK über denjenigen Programmablauf, auf den umgeschaltet werden soll. Eine Steuereinheit 21 empfängt diese Informationen von der Auswertungseinheit 13 und veranlaßt davon abhängig, wie bereits beschrieben worden ist, die Verwendung der jeweils korrekten Hardwareumgebung 8. Zu diesem Zweck gibt die Steuereinheit 21 einerseits eine Information CTASK über den augenblicklich auszuführenden Programmablauf an den Befehlsdecoder 5 und die BCU-Einheit 6 sowie den diesem Programmablauf CTASK entsprechenden Programmzähler PC zur Adressierung des Programmspeichers 2 aus.

Die Interruptverarbeitung erfolgt prioritätsgesteuert. Zu diesem Zweck ist jedem Programmablauf und jedem Interrupt-Ereignis EV eine individuelle Priorität zugewiesen. Die Priorität PRIO des augenblicklichen Programmablaufs wird der Auswertungseinheit 13 von der Steuereinheit 21 mitgeteilt. Grundsätzlich kann ein Programmablauf von einem Interrupt nur dann unterbrochen werden, wenn das entsprechende Interrupt-Ereignis eine höhere Priorität als der Programmablauf besitzt. Demzufolge muß die Priorität eines Programmablaufs durch den Programmablauf selbst oder durch einen anderen Programmablauf heruntergesetzt werden, falls eine Unterbrechung des entsprechenden Programmablaufs auch durch Interrupt-Ereignisse mit einem geringeren Prioritätsgrad möglich sein soll. Ein Programmablauf, der den höchsten Prioritätsgrad besitzt, kann nur durch Interrupt-Ereignisse unterbrochen werden, die ebenfalls den höchsten Prioritätsgrad besitzen. Dies kann beispielsweise auf einen "Reset"-Interrupt zutreffen.

Innerhalb der verschiedenen Prioritätsgrade ist ein bestimmter Prioritätsgrad definiert, der ausschließlich zu einem Programmablaufwechsel führt. D.h. nur Interrupt-Ereignisse mit diesem Prioritätsgrad können einen Wechsel zwischen den einzelnen Programmabläufen hervorrufen, so daß nur bei Auftreten dieser Interrupt-Ereignisse die in Fig. 2 gezeigten Informationen SWITCH und TASK erzeugt und der Steuereinheit 21 zugeführt werden. Alle anderen Interrupt-Ereignisse führen lediglich dazu, daß von der Auswertungseinheit 13 die Interruptanforderung IRQ mit einem Vektor VEC, der die Sprung- oder Startadresse für die auszuführende Interruptroutine enthält, ausgegeben wird. Der Steuereinheit 21 werden somit entweder die Signale SWITCH und TASK oder die Signale IRQ und VEC zugeführt. Im ersten Fall erfolgt der Aufruf einer entsprechenden Interruptroutine, während im zweiten Fall ein Programmablaufwechsel stattfindet. Das "IRQ"-Signal und das "SWITCH"-Signal können nicht gleichzeitig auftreten.

In Fig. 3 ist eine mögliche Realisierung für die in Fig. 2 gezeigte Auswertungseinheit 13 dargestellt, wobei davon ausgegangen wird, daß drei unterschiedlichen Prioritäten definiert sind und die Priorität "2" die exklusiv für einen Programmablaufwechsel vorgesehene Priorität ist. Für jede Gruppe von Interrupt-Ereignissen EV_1...EV_3, die dieselbe Priorität besitzten, ist eine eigene Überwachungseinheit 14_1...14_3 vorgesehen, welche ausschließlich das Auftreten der ihr zugewiesenen Interrupt-Ereignisse sowie die Priorität PRIO des augenblicklich abgearbeiteten Programmablaufs überwacht.

Sobald die Überwachungseinheit 14_1 oder 14_3 das Auftreten eines ihr zugeordneten Interrupt-Ereignisses EV_1 oder EV_3 erkannt hat, wird ein Interrupt-Anforderungssignal IRQ erzeugt, und eine nachgeschaltete Einheit 15_1 bzw. 15_3 generiert abhängig von dem aufgetretenen Interrupt-Ereignis einen entsprechenden Vektor VEC, der die gewünschte Startadresse für die auszuführende Interruptroutine bezeichnet. Die somit erzeugten Signale werden Multiplexern 16 bzw. 17 zugeführt, wobei die Multiplexer 16 und 17 abhängig von dem Prioritätssteuersignal PRIO geschaltet werden und davon abhängig lediglich einen der beiden Eingangssignale an ihren Ausgang durchschalten und der in Fig. 2 gezeigten Steuereinheit 21 zuführen.

Die Überwachungseinheit 14_2 ist ausschließlich zum Überwachen derjenigen Interrupt-Ereignisse EV_2 vorgesehen, welche die Priorität "2" besitzen und somit per Definition einen Wechsel des Programmablaufs hervorrufen können. Sobald die Überwachungseinheit 14_2 das Auftreten eines ihr zugeordneten Interrupt-Ereignisses EV_2 erkannt hat, wird das Umschaltsignal SWITCH erzeugt, welches die Steuereinheit 21 anweist, einen Programmablaufwechsel vorzunehmen, und eine nachgeschaltete Einheit 15_2 erzeugt abhängig von dem aufgetretenen Interrupt-Ereignis in Form der Information TASK die Nummer desjenigen Programmablaufs, auf den umgeschaltet werden soll.

Innerhalb jeder Überwachungseinheit 14_1...14_3 können Unterprioritäten definiert sein, wenn die entsprechende Überwachungseinheit ihre Eingänge hinsichtlich des Auftretens der entsprechenden Interrupt-Ereignisse stets in derselben Reihenfolge, beispielsweise stets von oben nach unten, abtastet.

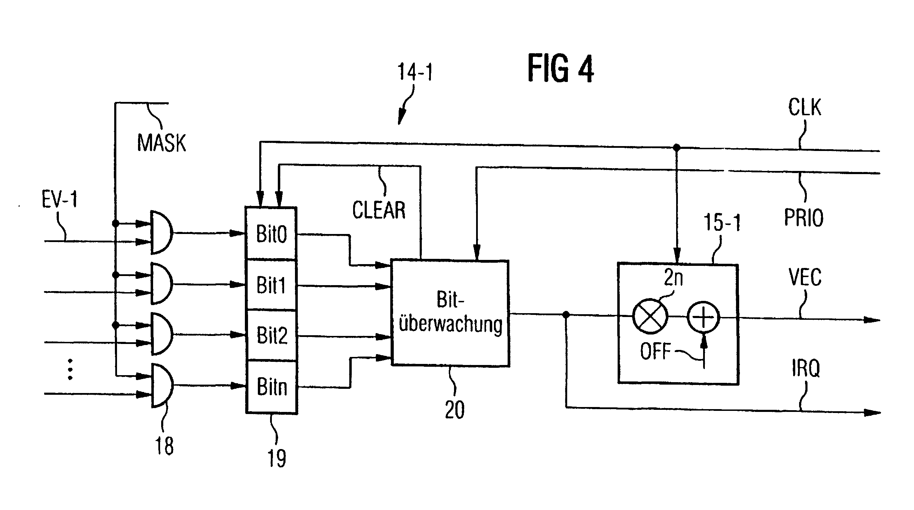

In Fig. 4 ist eine mögliche Realisierung für die in Fig. 3 gezeigte Überwachungseinheit 14_1 und die nachgeschaltete Einheit 15_1 dargestellt.

Die Überwachungseinheit 14_1 umfaßt einen Eingangsspeicher 19, in dem bei Auftreten eines der Interrupt-Ereignisse EV_1 ein entsprechendes Eit gesetzt wird. Eine Bitüberwachungseinheit 20 überwacht die einzelnen Bits des Eingangsspeichers 19 in Übereinstimmung mit einem vorgegebenen Takt CLK. Sobald die Bitüberwachungseinheit 20 in dem Eingangsspeicher 19 ein gesetztes Bit erkannt hat, wird das Interrupt-Anforderungssignal IRQ erzeugt und abhängig von der Position des in dem Eingangsspeicher 19 gesetzten Bits der Vektor VEC mit der Start- oder Sprungadresse für die gewünschte Interrupt-Routine generiert. Zu diesem Zweck wird die Position des in dem Eingangsspeicher 19 gesetzten Bits von der Einheit 15_1 auf die entsprechende Startadresse abgebildet, wobei dies wie in Fig. 4 gezeigt dadurch erfolgt, daß zunächst eine (einer Multiplikation mit dem Faktor 2ⁿ) entsprechende Bitverschiebeoperation um n Bits und anschließend eine Addition mit einem bestimmten Offsetwert OFF durchgeführt wird. Anschließend wird mit Hilfe eines Löschsignals CLEAR das in dem Eingangsspeicher 19 gesetzte Bit wieder gelöscht.

In der Bitüberwachungseinheit 20 wird auch die Priorität PRIO des augenblicklichen Programmablaufs überwacht. Die Erzeugung des Interrupt-Anforderungssignals IRQ und des Vektors VEC mit der Startadresse der entsprechenden Interrupt-Routine wird von der Bitüberwachungseinheit 20 nur freigegeben, wenn die Priorität PRIO des augenblicklichen Programmablaufs kleiner als die Priorität der entsprchenden Interrupt-Ereignisse ist.

In Fig. 4 ist zudem die Möglichkeit dargestellt, daß einzelne Interrupt-Ereignisse mit Hilfe einer Ausblendungs- oder Maskierungsschaltung 18 maskiert, d.h. für die Bitüberwachungseinheit 20 unsichtbar gemacht, werden können.

Im vorliegenden Beispiel ist diese Ausblendungsschaltung 18 in Form von AND-Gattern ausgestaltet, die mit Hilfe eines entsprechenden Signals MASK programmiert werden können. Vorzugsweise wird vor jeder Überwachungseinheit 14_1...14_3 eine derartige individuell programmierbare Ausblendungsschaltung 18 eingesetzt.

Die Überwachungseinheit 14_3 und die entsprechende Einheit 15_3 können identisch zu Fig. 4 aufgebaut sein. Ebenso kann die Überwachungseinheit 14_2 identisch zu Fig. 4 aufgebaut sein. Der Aufbau der Einheit 15_2 unterscheidet sich hingegen gegenüber Fig. 4 dadurch, daß von der Einheit 15_2 die Position eines in dem entsprechenden Eingangsspeicher 19 gesetzten Bits nicht auf eine Adresse, sondern auf eine Programmablaufnummer abgebildet wird.

## Patentansprüche

1. Multitasking-Prozessorsystem,
mit einer Programmsteuerung (12), die eine Auswerteeinheit (13) zum Überwachen des Auftretens von Interrupt-Ereignissen (EV) und
eine Steuereinheit (21) aufweist, die zum Steuern der Ausführung einer Interruptroutine vorgesehen ist, wenn von der Auswerteeinheit (13) das Auftreten eines Interrupt-Ereignisses (EV) erkannt worden ist,
wobei in dem Multitasking-Prozessorsystem für verschiedene Programmabläufe unterschiedliche Speicherschaltungen (8) vorgesehen sind, und
die Steuereinheit (21) derart ausgestaltet ist, dass sie bei Auftreten eines bestimmten Interrupt-Ereignisses (EV), welches einen Wechsel von einem augenblicklichen Programmablauf zu einem neuen Programmablauf hervorruft und
welches einen bestimmten vorgegebenen Prioritätsgrad aufweist, zur Ausführung des neuen Programmablaufs ein Umschalten von der dem bisherigen Programmablauf zugeordneten Speicherschaltung (8) auf die dem neuen Programmablauf zugeordneten Speicherschaltung (8) veranlasst,
wobei die Speicherschaltung (8) jeweils einen Speicher (9) für einen Programmzähler des zugehörigen Programmablaufs, mindestens ein Register (10) zum Zwischenspeichern von Daten, die bei der Ausführung des zugehörigen Programmablaufs anfallen, und
mindestens ein Zustandsregister (11) zum Speichern von Zustandsinformationen des zugehörigen Programmablaufs aufweist, wobei den einzelnen Interrupt-Ereignissen individuelle Prioritäten zugeordnet sind und mindestens eine bestimmte Priorität für einen Wechsel zu einem neuen Programmablauf vorgesehen ist, und
wobei die Auswerteinheit (13) bei Erkennen des Auftretens eines Interrupt-Ereignisses (EV) mit der bestimmten Priorität eine entsprechende Aufforderung (SWITCH) für einen Wechsel von dem augenblicklichen Programmablauf zu dem entsprechenden neuen Programmablauf an die Steuereinheit (21) weiterleitet.

2. Prozessorsystem nach Anspruch 1,
**dadurch gekennzeichnet,**
**dass** den einzelnen, von dem Prozessorsystem ausführbaren Programmabläufen individuelle Prioritäten zugeordnet sind, dass den einzelnen Interrupt-Ereignissen individuelle Prioritäten zugeordnet sind, und
**dass** die Auswerteeinheit (13) derart ausgestaltet ist, dass sie bei Erkennen des Auftretens eines Interrupt-Ereignisses eine entsprechende Aufforderung (IRQ) zur Ausführung des entsprechenden Interrupts an die Steuereinheit (21) nur dann weiterleitet, falls die Priorität des entsprechenden Interrupt-Ereignisses höher als die Priorität (PRIO) des in dem Prozessorsystem augenblicklich ablaufenden Programmablaufs ist.

3. Prozessorsystem nach Anspruch 2,
**dadurch gekennzeichnet,**
**dass** die Auswerteeinheit (13) derart ausgestaltet ist, dass sie bei Erkennen des Auftretens eines Interrupt-Ereignisses mit der bestimmten Priorität zusammen mit der Aufforderung (SWITCH) für den Wechsel von dem augenblicklichen Programmablauf zu dem entsprechenden neuen Programmablauf auch eine den neuen Programmablauf spezifizierende Information (TASK) an die Steuereinheit (21) weiterleitet.

4. Prozessorsystem nach Anspruch 2 oder 3,
**dadurch gekennzeichnet,**
**dass** die Auswerteeinheit (13) derart ausgestaltet ist, dass sie bei Erkennen des Auftretens eines Interrupt-Ereignisses eine entsprechende Aufforderung (IRQ) zur Ausführung des entsprechenden Interrupts zusammen mit einer eine entsprechende Interrupt-Routine spezifizierenden Adresse (VEC) an die Steuereinheit (21) nur dann weiterleitet, falls die Priorität des entsprechenden Interrupt-Ereignisses höher als die Priorität (PRIO) des in dem Prozessorsystem augenblicklich ablaufenden Programmablaufs ist und die Priorität des Interrupt-Ereignisses nicht der bestimmten Priorität entspricht.

5. Prozessorsystem nach einem der vorhergehenden Ansprüche,
**dadurch gekennzeichnet,**
**dass** die Auswerteeinheit (13) für jede mögliche Priorität der Interrupt-Ereignisse (EV) eine separate Überwachungseinrichtung (14) umfasst, wobei jede Überwachungseinrichtung (14) das Auftreten der Interrupt-Ereignisse (EV) mit der jeweils entsprechenden Priorität überwacht.

6. Prozessorsystem nach einem der vorhergehenden Ansprüche,
**dadurch gekennzeichnet,**
**dass** der Auswerteeinheit (13) eine programmierbare Maskierungsschaltung (18) vorgeschaltet ist, die abhängig von ihrer Programmierung das Auftreten entsprechender Interrupt-Ereignisse (EV) für die Auswerteeinheit (13) maskiert.

7. Prozessorsystem nach Anspruch 5 und 6,
**dadurch gekennzeichnet,**
**dass** die Auswerteeinheit (13) für jede Überwachungseinrichtung (14) eine dieser Überwachungseinrichtung (14) vorgeschaltete separate Maskierungsschaltung (18) aufweist.

8. Verwendung eines Prozessorsystems nach einem der vorhergehenden Ansprüche in einem Telekommunikations-Endgerät, insbesondere in einem xDSL-Telekommunikations-Endgerät.

## Claims

1. Multitasking processor system comprising a program controller (12) which exhibits an evaluating unit (13) for monitoring the occurrence of interrupt events (EV) and a control unit (21) which is provided for controlling the execution of an interrupt routine when the evaluating unit (13) has detected the occurrence of an interrupt event (EV), different memory circuits (8) being provided for different tasks in the multitasking processor system, and the control unit (21) being designed in such a manner that, on the occurrence of a particular interrupt event (EV) which causes a change from a current task to a new task and which exhibits a particular predetermined priority level, it initiates, for executing the new task, a switchover from the memory circuit (8) allocated to the previous task to the memory circuit (8) allocated to the new task, the memory circuit (8) exhibiting in each case one memory (9) for a program counter of the associated task, at least one register (10) for temporarily storing data which are produced during the execution of the associated task, and at least one status register (11) for storing status information of the associated task, individual priorities being allocated to the individual interrupt events and at least one particular priority being provided for a change to a new task, and the evaluating unit (13), on detection of the occurrence of an interrupt event (EV) having the particular priority, forwarding a corresponding request (SWITCH) for a change from the current task to the corresponding new task to the control unit (21).

2. Processor system according to Claim 1, **characterized in that** individual priorities are allocated to the individual tasks which can be executed by the processor system, **in that** said individual priorities are allocated to the individual interrupt events, and **in that** the evaluating unit (13) is designed in such a manner that, on detection of the occurrence of an interrupt event, it only forwards a corresponding request (IRQ) for execution of the corresponding interrupt to the control unit (21) if the priority of the corresponding interrupt event is higher than the priority (PRIO) of the task currently running in the processor system.

3. Processor system according to Claim 2, **characterized in that** the evaluating unit (13) is designed in such a manner that, on detection of the occurrence of an interrupt event having the particular priority together with the request (SWITCH) for the change from the current task to the corresponding new task, it also forwards an information item (TASK) specifying the new task to the control unit (21).

4. Processor system according to Claim 2 or 3,
**characterized in that** the evaluating unit (13) is designed in such a manner that, when the occurrence of an interrupt event is detected, it only forwards a corresponding request (IRQ) for execution of the corresponding interrupt together with an address (VEC) specifying a corresponding interrupt routine to the control unit (21) if the priority of the corresponding interrupt event is higher than the priority (PRIO) of the task currently running in the processor system and the priority of the interrupt event does not correspond to the particular priority.

5. Processor system according to one of the preceding claims, **characterized in that** the evaluating unit (13) comprises a separate monitoring device (14) for each possible priority of the interrupt events (EV), each monitoring device (14) monitoring the occurrence of the interrupt events (EV) having the corresponding priority in each case.

6. Processor system according to one of the preceding claims, **characterized in that** the evaluating unit (13) is preceded by a programmable masking circuit (18) which masks the occurrence of corresponding interrupt events (EV) for the evaluating unit (13) in dependence on its programming.

7. Processor system according to Claim 5 and 6, **characterized in that** the evaluating unit (13) exhibits for each monitoring device (14) a separate masking circuit (18) which precedes this monitoring device (14).

8. Use of a processor system according to one of the preceding claims in a telecommunication terminal, particularly in an xDSL telecommunication terminal.

## Revendications

1. Système de processeur multitâche, comprenant une commande de programme (12), qui comporte une unité d'analyse (13) destinée à contrôler l'apparition d'événements d'interruption (EV) et une unité de commande (21), qui est prévue pour commander l'exécution d'un sous-programme d'interruption, chaque fois que l'unité d'analyse (13) a détecté l'apparition d'un événement d'interruption (EV), dans lequel divers composants de mémoire (8) sont prévus dans le système de processeur multitâche pour différentes tâches et l'unité de commande (21) est conçue de telle sorte que, en cas d'apparition d'un événement d'interruption (EV) déterminé, qui implique un basculement d'une tâche actuelle vers une nouvelle tâche et qui possède un niveau prioritaire déterminé prédéfini, ladite unité de commande ordonne pour l'exécution de la nouvelle tâche une commutation du composant de mémoire (8) associé à la tâche en cours vers le composant de mémoire (8) associé à la nouvelle tâche, dans lequel chaque composant de mémoire (8) est formé par une mémoire (9) pour un registre d'instruction de la tâche correspondante, par au moins un registre (10) destiné à la sauvegarde temporaire des données qui sont crées lors de l'exécution de la tâche correspondante, et par au moins un registre d'état (11) destiné à sauvegarder les informations d'état de la tâche correspondante, des niveaux de priorité individuels étant affectés à chaque événement d'interruption et au moins un niveau de priorité déterminé étant prévu pour un basculement vers une nouvelle tâche, et dans lequel l'unité d'analyse (13), lorsqu'elle détecte l'apparition d'un événement d'interruption (EV) avec le niveau de priorité déterminé, transmet vers l'unité de commande (21) une requête (SWITCH) correspondante pour un basculement de la tâche actuelle vers la nouvelle tâche correspondante.

2. Système de processeur selon la revendication 1, **caractérisé en ce que** des niveaux de priorité individuels sont affectés aux différentes tâches à exécuter par le système de processeur, **en ce que** des niveaux de priorité individuels sont affectés aux différents événements d'interruption et **en ce que** l'unité d'analyse (13) est conçue de telle sorte que, lorsqu'elle détecte l'apparition d'un événement d'interruption, elle transmet vers l'unité de commande (21) une requête (IRQ) correspondante pour l'exécution de l'interruption correspondante, si le niveau de priorité de l'événement d'interruption correspondant est plus élevé que le niveau de priorité (PRIO) de la tâche en cours d'exécution dans le système de processeur.

3. Système de processeur selon la revendication 2, **caractérisé en ce que** l'unité d'analyse (13) est conçue de telle sorte que, lorsqu'elle détecte l'apparition d'un événement d'interruption avec le niveau de priorité déterminé, elle transmet vers l'unité de commande (21), conjointement à la requête (SWITCH) pour le basculement de la tâche actuelle vers la nouvelle tâche correspondante, également une information (TASK) spécifiant la nouvelle tâche.

4. Système de processeur selon la revendication 2 ou 3, **caractérisé en ce que** l'unité d'analyse (13) est conçue de telle sorte que, lorsqu'elle détecte l'apparition d'un événement d'interruption, elle transmet vers l'unité de commande (21) une requête (IRQ) correspondante pour l'exécution de l'interruption correspondante conjointement avec une adresse (VEC) spécifiant un sous-programme d'interruption correspondant, à la seule condition que le niveau de priorité de l'événement d'interruption correspondant soit plus élevé que le niveau de priorité (PRIO) de la tâche en cours d'exécution dans le système et le niveau de priorité de l'événement d'interruption ne correspond pas au niveau de priorité déterminé.

5. Système de processeur selon l'une quelconque des revendications précédentes, **caractérisé en ce que** l'unité d'analyse (13) comprend une unité de contrôle (14) séparée pour chaque niveau de priorité possible de l'événement d'interruption (EV), chaque unité de contrôle (14) contrôlant l'apparition de l'événement d'interruption (EV) avec le niveau de priorité correspondant dans chaque cas.

6. Système de processeur selon l'une quelconque des revendications précédentes, **caractérisé en ce qu'**en amont de l'unité d'analyse (13) est monté un composant de masquage (18) programmable qui, en fonction de sa programmation, masque à l'unité d'analyse (13) l'apparition d'événements d'interruption (EV) correspondants.

7. Système de processeur selon les revendications 5 et 6, **caractérisé en ce que** l'unité d'analyse (13) comporte pour chaque unité de contrôle (14) un composant de masquage (18) séparé, monté en amont de cette unité de contrôle (14).

8. Utilisation d'un système de processeur selon l'une quelconque des revendications précédentes dans un terminal de télécommunication, en particulier un terminal de télécommunication xDSL.
